# EUROPEAN PATENT APPLICATION

(11) **EP 1 935 632 A1**
(43) Date of publication of application: **25.06.2008**
(21) Application number: 07386032.2
(22) Date of filing: 20.12.2007
(51) Int. Cl.: B32B 15/08, B65D 85/808

(54) **Air-proof and light-proof filter bag sealed packing, for individual brews production**

(30) Priority: 21.12.2006 GR 20060100698
(71) Applicant: Arapakos, Georgios, 73100 Chania, Crete (GR)
(72) Inventor: Arapakos, Georgios, 73100 Chania, Crete (GR)

(57) **Abstract**

The air-proof and light-proof filter bag sealed packing, for individual brews production is widely spread because of the tea and it is composed of the filter bag, the brew raw material, the thread and the tag. This kind of packing can also be applied for filter coffee.

The basic idea of the invention is the sealed packaging of the above filter bag system in an envelope film made of air-proof and light-proof material which does not permit the alteration of the raw material that is contained inside the filter bag. This film system is composed of two thinner films of plastic and between them is applied an aluminum foil film.

This technique permits the maximum possible conservation of the brews raw material and provides the unique capability of coffee industrial production, in this specific type of packing.

## Description

The invention regards the application of specific packing material on brews raw material, like tea and coffee which does not allow the alteration of their constituents. The packing of the individual filter bags is widely spread because of the tea and it is composed of the filter bag, the brew raw material, the thread and the tag. This kind of packing can also be applied for filter coffee.

The brews' raw material that is packed in this kind of packing offers many advantages, like precise raw material dose and consequently economy, reduction of the production time, practicality, safe and easy transfer and abrogation of all the brew making appliances.

However, the industrial application today does not protect adequately the filter bags after opening the outer box film packaging. This happens because either the filter bags are packed in box without any specific envelope protection, or the outer filter bag envelope that is applied, is made of paper which cannot provide the adequate conservation to the brew raw material. This fact results in the alteration of the sensitive brew raw material like tea and coffee, in a short period of time after the box opening because of the air and light influence.

The basic idea of the invention is the sealed packaging of the above filter bag system in an envelope film made of air-proof and light-proof material. This specific material application does not allow the natural ingredients' alteration of the brew raw material that is contained in the filter bag. The application of this kind of packing material meets industrial and commercial application that increases the conservation period of the sensitive brew raw material.

This packing material is a thin film that is composed of two thinner films of plastic which are usually made of different type of plastic and between them is interposed aluminum foil. The outer plastic film is made of polypropylene and the inner that is in touch with the filter bag is made of polythene. The three thin films polypropylene, aluminum foil and polythene are heated and fit together so that they form the final film which has the desirable technical specification. Moreover, the outer plastic film which is exposed to the environment can be treated with a kind of a specific paint or a similar technique so that offers more light protection to the raw material packed inside. There is also the capability of the application of vacuum or artificial atmosphere inside the filter bag.

Consequently, this film provides the desirable protection for the brew raw material as follows. First of all, the inside polythene film seals air-tightly the raw material. Secondly, the aluminum foil film protects it from the environmental light because it is not light penetrable. Finally, the third polypropylene film makes the film system more durable and stable and provides additional insulation of air and light especially when it is paint treated on the outer side.

Furthermore, it must be referred that packing material with similar specification is used in the modern food industry, especially regarding sensitive foods, but still not applied to the individual filter bag brews packing.

Maybe, the application lack of this kind of packing material is the cause to the fact that the filter coffee does not come up the market in this type of filter bags packing. In case that coffee would be packed without the application of this individual air-proof and light-proof envelope, just a few hours after the box opening would be enough for the coffee raw material of the rest filter bags to be altered. This is because of air and light the two basic factors that are responsible for the alteration of the brew raw material.

Especially, regarding coffee the conservation of its ingredients and especially its scent is very important because it is a very sensitive product.

This technique provides the unique capability of the coffee industrial production, in this specific type of packing.

Moreover, this practice improves the conservation of products like tea because there are some kinds of teas and herbs which are so sensitive as coffee. Of course, alteration cannot be easily detected in all the herbs' species and to such an extent as in the case of coffee.

## Claims

1. The air-proof and light-proof filter bag sealed packing, for individual brews production is defined by the application of a protective envelope film. This film system is composed of two thinner films of plastic which usually differ in their quality and between them is applied an aluminum foil film. The outer side of the film can be paint treated, for further light insulation. There is also the potentiality application of vacuum or artificial atmosphere inside the filter bag.

2. The air-proof and light-proof filter bag sealed packing, for individual brews production according to the claim 1, provides the unique capability of the coffee industrial production, in this specific type of packing, because coffee is a very sensitive product regarding the air and light exposure.
